# EUROPEAN PATENT APPLICATION

(11) **EP 1 747 739 A1**
(43) Date of publication of application: **31.01.2007**
(21) Application number: 06253885.5
(22) Date of filing: 25.07.2006
(51) Int. Cl.: A47J 31/057, A47J 31/46, A47J 31/50

(54) **Beverage maker**

(30) Priority: 25.07.2005 JP 2005214721; 31.03.2006 JP 2006096745
(71) Applicant: IZUMI PRODUCTS COMPANY, Matsumoto, Nagano (JP)
(72) Inventor: Takizawa, Hiroyuki, Matsumoto Nagano (JP); Furuhata, Shinichi, Matsumoto Nagano (JP); Kashiwabara, Shuhei, Matsumoto Nagano (JP); Shimizu, Tetsuhiko, Matsumoto Nagano (JP); Wanikawa, Hiroaki, Matsumoto Nagano (JP); Uchiyama, Hiromi, Matsumoto Nagano (JP); Kubo, Emiko, Matsumoto Nagano (JP); Izumi, Yukio, Matsumoto Nagano (JP); Ohno, Hiroki, Matsumoto Nagano (JP); Ozawa, Tetsuya, Matsumoto Nagano (JP); Koike, Aya, Matsumoto Nagano (JP)
(74) Representative: Jenkins, Peter David

(57) **Abstract**

A beverage maker (10) including an extract liquid receptacle (52A) for accumulating therein extract liquid which is extracted by a beverage extractor, and a cooling liquid reservoir (52B) for accommodating therein cooling liquid that contacts the extract liquid with the wall of the extract liquid receptacle in between; and the beverage maker (10) further including a stirring vane (50A) for stirring the extract liquid inside the extract liquid receptacle (52A), and a vane drive unit (22) for driving the stirring vane (50A).

## Description

### BACKGROUND OF THE INVENTION

### 1. Field of the Invention

The present invention pertains to a beverage maker for cooling, with a cooling liquid such as ice water, a beverage such as hot coffee liquid extracted using coffee powder.

### 2. Description of the Related Art

Coffee makers, which use so-called regular coffee, of a drip type in which hot water at high temperature is poured into a coffee funnel into which coffee powder has been placed, the coffee is extracted, and the dripped coffee liquid is collected, such as a drip type that uses a paper filter, for example, are commonly known. Iced coffee extraction methods for cooling coffee (hot coffee liquid) extracted in that way with ice are also commonly known.

Japanese Patent Application Laid-Open (Kokai) No. S61-179115 and Japanese Utility Model Application Laid-Open (Kokai) No. S59-7732 disclose coffee makers in which hot water at high temperature resulting from heating water of a water reservoir with a heater is poured into a chamber (coffee filter) into which coffee powder has been placed, and the coffee liquid at high temperature which drips from the chamber is passed through the interior of an ice chamber wherein ice has been placed and collected in a decanter placed underneath. In other words, these coffee makers cool high-temperature coffee liquid by pouring it over ice.

Japanese Patent Application Laid-Open (Kokai) 2005-143702 discloses a coffee maker makes it possible to select between a hot coffee extraction mode (hot coffee extraction style) and an iced coffee extraction mode (iced coffee extraction style). In the iced coffee extraction mode, the extracted hot coffee liquid is received in a coffee liquid receptacle, and this is made into iced coffee by cooling with ice water from the exterior of that coffee liquid receptacle. In this case, a cooling unit is used which surrounds the outer circumference of the coffee liquid receptacle (wall) with ice water of an ice water reservoir, and the coffee liquid is made to flow down into a jug by opening a discharge valve provided at the bottom of the coffee liquid receptacle.

Japanese Patent Application Laid-Open (Kokai) 2005-143702 further discloses a coffee maker in which a coffee funnel is detachably provided on the lower surface of the top housing of the main body unit, and this coffee funnel is rotationally driven, so that coffee is extracted while rotating the coffee funnel. The coffee funnel in Japanese Patent Application Laid-Open (Kokai) 2005-143702 is used both in the iced coffee extraction mode and in the hot coffee extraction mode. As a result, in the hot coffee extraction mode, the hot coffee is received into the coffee liquid receptacle without placing ice in the ice water reservoir, and made to flow down into a jug.

In the coffee makers of Japanese Patent Application Laid-Open (Kokai) No. S61-179115 and Japanese Utility Model Application Laid-Open (Kokai) No. S59-7732, the high-temperature coffee liquid is cooled by bringing it directly into contact with ice; accordingly, the cooled coffee liquid will be weakened by the melt water from the ice. As a result, the flavor of the iced coffee will deteriorate, and the taste and odor of the ice will remain in the coffee liquid, which are problems.

On the other hand, in the coffee maker of Japanese Patent Application Laid-Open (Kokai) 2005-143702, since the coffee liquid extracted in the iced coffee extraction mode is not directly poured over ice, the coffee is not weakened by the melt water from the ice. However, because the coffee extract liquid is cooled through a wall (wall) partitioning the coffee liquid receptacle and the ice water reservoir, it takes time to cool the coffee liquid, which is a problem.

### BRIEF SUMMARY OF THE INVENTION

According, it is an object of the present invention, which was devised in view of such circumstances as described above, to provide a beverage maker which is made so that, when a beverage such as coffee that has been extracted by beverage extraction means is cooled with ice, a flavorful and delicious cooled beverage can be easily made in a short time, without the beverage being weakened by melt water from ice.

The above object is accomplished by a unique structure of the present invention for a beverage maker that includes an extract liquid receptacle for accumulating therein extract liquid extracted by beverage extraction means, and a cooling liquid reservoir for accommodating therein cooling liquid that contacts the extract liquid with the wall of the extract liquid receptacle in between; and in this structure, the beverage maker further includes a stirring vane for stirring the extract liquid inside the extract liquid receptacle, and a vane drive unit for driving the stirring vane.

In the above structure of the present invention, the extract liquid receptacle is cooled by the cooling liquid accommodated in the cooling liquid reservoir; however, since a stirring vane driven by a vane drive unit is provided inside the extract liquid receptacle, the extract liquid is stirred and cooled efficiently. Cold beverage can thus be made in a short time.

In the present invention, it is desirable that the stirring vane be driven in the horizontal direction inside the extract liquid receptacle. In other words, the stirring vane make, for instance, a rotating motion or a reciprocal motion in a horizontal plane. The stirring vane can be designed so that it is advanced into the interior of the extract liquid receptacle diagonally and driven by a rotating shaft that passes through the bottom or side wall of the extract liquid receptacle. Furthermore, a magnetic coupling can be formed with a stirring vane on the inside and a drive unit that rotates on the exterior, sandwiching the wall of the extract liquid receptacle.

The stirring vane can be provided not only in the extract liquid receptacle but also inside the cooling liquid reservoir.

The beverage extraction means can be an extraction funnel. The extraction funnel can be rotated about a vertical line as the center; and in this structure, the extraction funnel and the stirring vane can be rotated as a unit by securing the stirring vane that advances into the extract liquid receptacle to the extraction funnel. In other word, in this structure, the rotating drive unit for the extraction funnel doubles (or is used also) as the vane drive unit. In this case, the stirring vane can be made freely attachable and detachable to and from the extraction funnel. In this structure, the same funnel can be used when extracting hot beverage when there is no need to stir the extract liquid receptacle, which is convenient.

In the present invention, the beverage extraction means extracts beverages other than coffee, such as Japanese tea, black tea, Chinese tea, or other teas and the like.

The stirring vane can be separated from the extraction funnel, so that it is advanced into the extract liquid receptacle from the side of the extract liquid receptacle and driven. With surface irregularities formed in the wall (partition) of the extract liquid receptacle that partitions the extract liquid and the cooling liquid, it is possible to further enhance the extract liquid cooling effect. This structure refers, for example, to effecting a knurling process to form a fine pattern of surface irregularities in the wall, securing fins or protrusions to the wall, or giving the wall a horizontal section that is polygonal or star-shaped. The surface irregularities can be provided in both or in one or other only of the outer circumferential surface and inner circumferential surface of the wall.

Furthermore, in the present invention, the vane drive unit can be designed so that it rotates the stirring vane in a fixed direction, and it can be designed so as to rotate the stirring vane in both forward and reverse directions. The switching between the forward and reverse rotating can be done with a manual switch, or it can be done by automatic reversal at a certain angle of rotation or at a certain time interval. Also, when there is a stirring vane in the extract liquid receptacle and in the cooling liquid reservoir, respectively, then the rotating direction of the two stirring vanes can be the same or opposite, or the rotating direction can be changed at a certain time interval (rotational).

In the present invention, it is preferable that the extract liquid receptacle and the cooling liquid reservoir be provided concentrically about a vertical axis and that the stirring vane make a circular motion about the vertical axis (axis of concentricity) as the center.

If the extract liquid receptacle is made attachable and detachable to and from the cooling liquid reservoir, then, after the extract liquid has been cooled, the extract liquid receptacle can be detached, by itself, from the cooling liquid reservoir, and the extract liquid poured into a cup or the like, making it easy to use. In this case, if extract liquid receptacles of differing capacity are made available, extract liquid receptacles that are used according to the extraction quantity can be interchangeably attached. Also, an extract liquid receptacle, in which the cooling properties are changed by bending the outer wall (wall) into a corrugated form to increase the surface area, can be interchangeably attached to the extract liquid receptacle.

Furthermore, in the present invention, it is possible to provide a discharge valve that passes through the cooling liquid reservoir at the bottom of the extract liquid receptacle, so that the cooled extract liquid can be discharged downward when that discharge valve is opened. The extract liquid can be ice water or a gelatinous organic coolant.

Also, when a hot water receptacle for conducting hot water to the extraction funnel is made to be capable of rotating about a vertical line, a stirring vane can be attached to that hot water receptacle. Instead of having this stirring vane stir only the extract liquid receptacle, the stirring vane can be added for stirring the cooling liquid reservoir also. These stirring vanes can be secured to the hot water receptacle, and they can be designed so as to be detachable.

It is preferable to form the cooling liquid reservoir in a ring shape so that it surrounds the exterior of the extract liquid receptacle; however, conversely, the cooling liquid reservoir can be put in place and the exterior thereof be surrounded by the extract liquid receptacle.

Furthermore, the cooling liquid reservoir may have, in addition to an outer cylindrical portion that is exterior to the extract liquid receptacle, a center portion provided inside the extract liquid receptacle. In other words, the present invention provides a triple cylindrical shape, with the center portion and outer cylindrical portion both constituting the cooling liquid reservoir, and the intermediate portion between the two (outer cylindrical portion and center portion) constituting the extract liquid receptacle.

### BRIEF DESCRIPTION OF THE SEVERAL VIEWS OF THE DRAWINGS

Figure 1 is a cross-sectional side view of a coffee maker according to one embodiment of the present invention for a beverage maker, the coffee maker being in an iced coffee extraction mode;
Figure 2 is a rear elevational view thereof;
Figure 3 is a top plan view thereof;
Figure 4 is a cross-sectional side view of the coffee maker in a hot coffee extraction mode;
Figure 5 is an exploded perspective view of the main body of the coffee maker;
Figure 6 is an exploded perspective view of the chuck, hot water receptacle and iced coffee extraction funnel;
Figure 7 is an exploded perspective view of the water reservoir;
Figure 8 is an exploded perspective view of the cooling unit and other parts;
Figure 9 is an overall conceptual illustration of the coffee maker according to the embodiment of the present invention;
Figure 10 is an enlarged cross-sectional view of the vicinity of the chuck of the drive shaft;
Figure 11 is a sectional view of the scatter;
Figure 12 is a conceptual illustration of another type of the stirring vanes;
Figure 13 is a conceptual illustration of another embodiment of the present invention;
Figure 14 is a conceptual illustration of another embodiment of the present invention;
Figure 15 is a conceptual illustration of another embodiment of the present invention;
Figure 16 is a conceptual illustration of another embodiment of the present invention;
Figure 17 is a conceptual illustration of another embodiment of the present invention; and
Figures 18A and 18B are top views of another type of the cooling unit.

### DETAILED DESCRIPTION OF THE INVENTION

### First embodiment

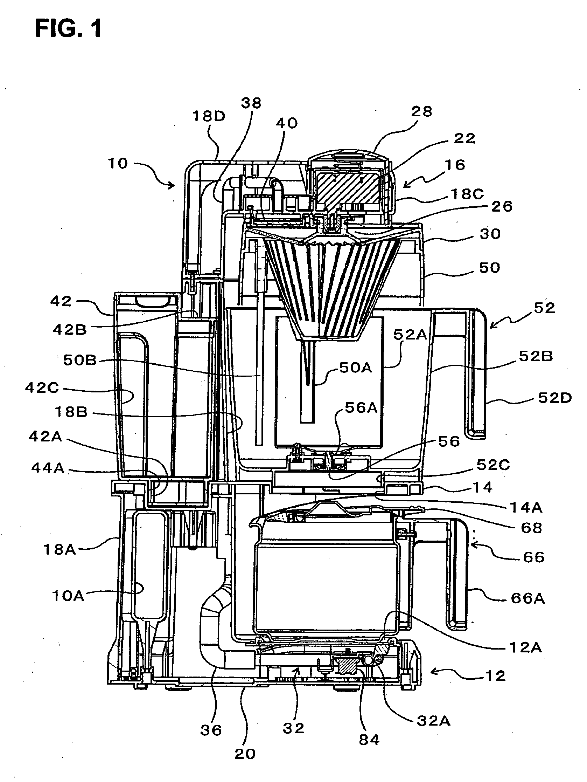

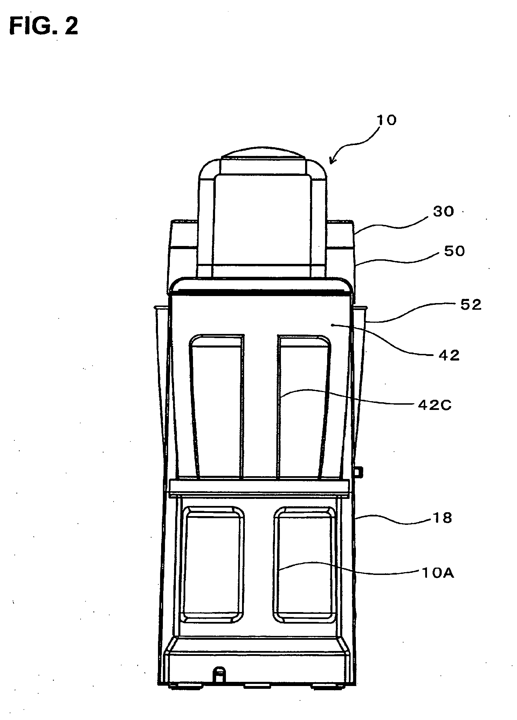

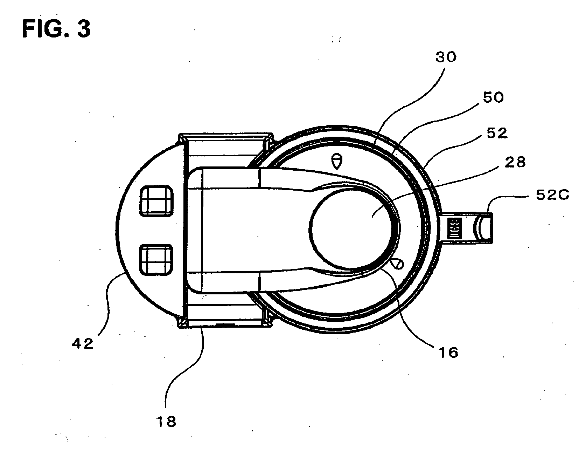

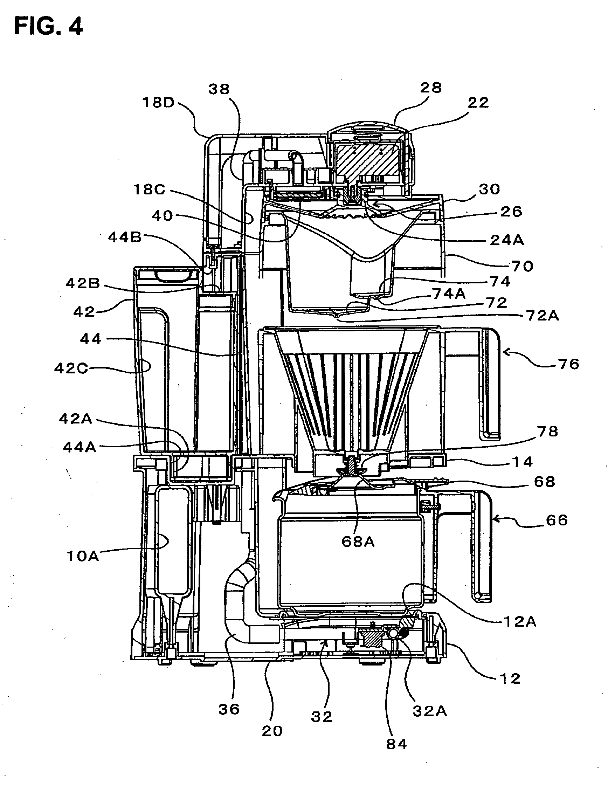

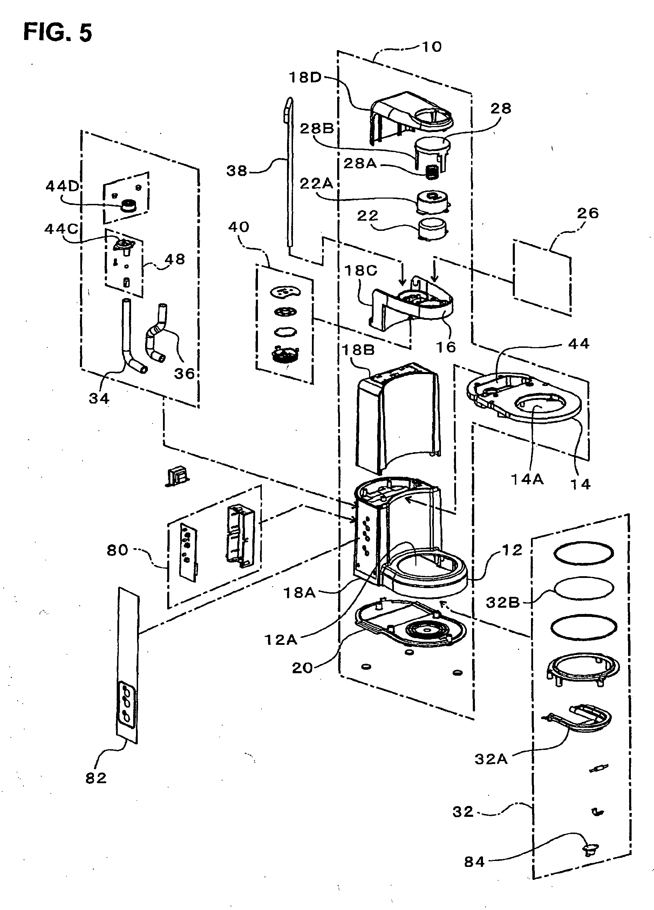

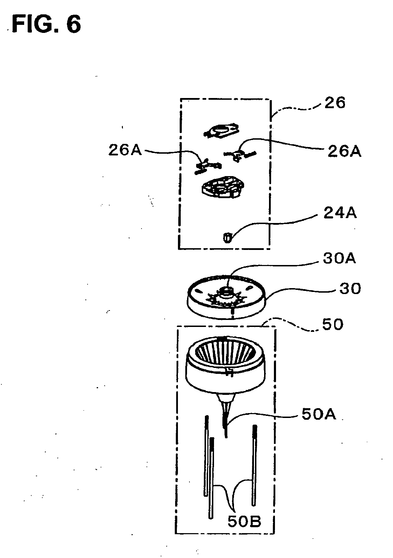

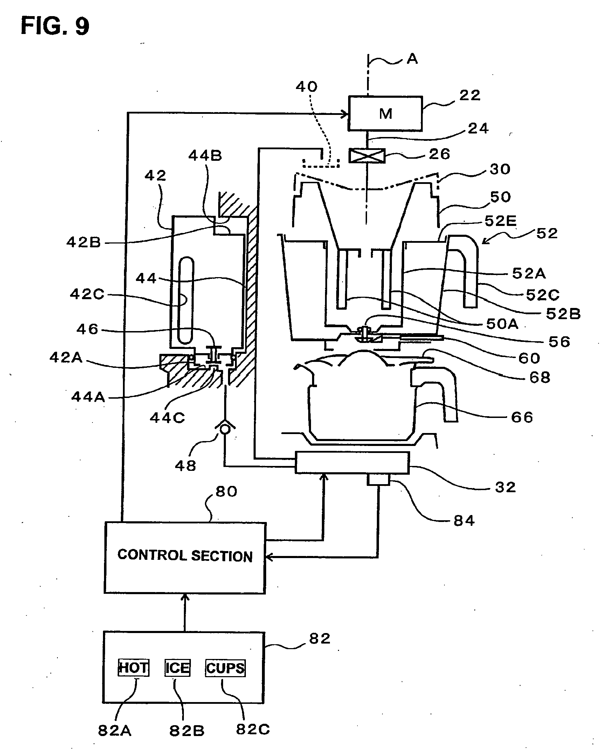

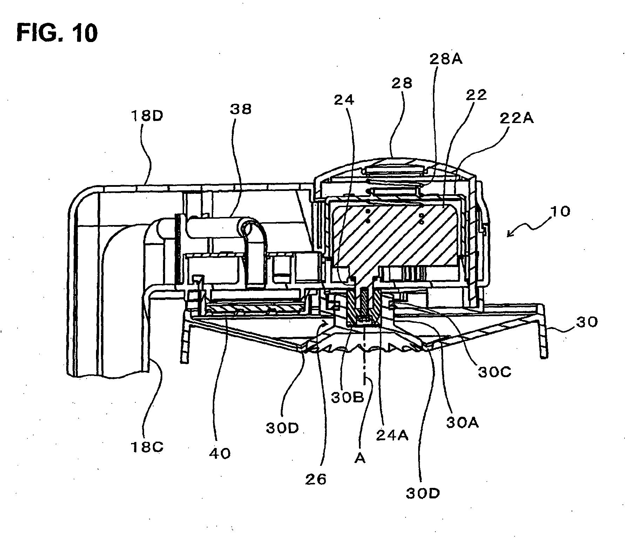

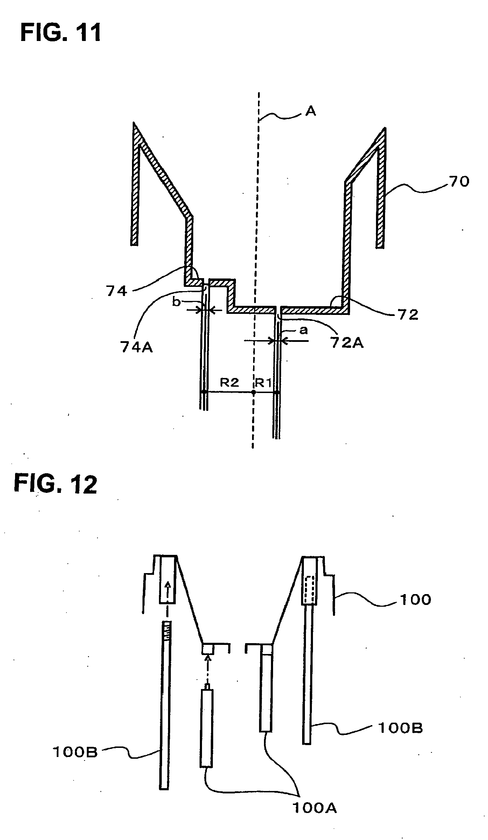

The shown embodiment is designed so that the coffee maker is capable of selectively extracting iced coffee and hot coffee, and the present invention is used in the iced coffee extraction mode. Figure 1 is a cross-sectional side view of the iced coffee extraction mode of the coffee maker of one embodiment of the present invention, Figure 2 is a rear elevational view thereof, and Figure 3 is a top view thereof. Figure 4 is a cross-sectional side view of the hot coffee extraction mode of the coffee maker. Figure 5 is an exploded perspective view of the parts of the main body unit of the coffee maker, Figures 6, 7, and 8 are exploded perspective views of the parts thereof, Figure 9 is an overall conceptual illustration, Figure 10 is an enlarged cross-sectional view of the vicinity of the chuck of a drive axis, and Figure 11 shows the cross-section of the scatter.

In these Figures, the reference numeral 10 is the main body of the coffee maker that includes a base housing 12, a partition member 14, and a top housing 16 which are joined by a vertical stand 18. The vertical stand 18, moreover, as shown in Figure 5, is comprised of a lower case 18A, middle case 18B, and upper case 18C stacked and joined in the vertical direction. The base housing 12 is formed integrally in the lower case 18A, and a bottom plate 20 (see Figure 5) is secured to the bottom of the base housing 12.

One end of the partition member 14 is held sandwiched between the joining surfaces of the lower case 18A and the middle case 18B, while the other end of the partition member 14 extends out above the base housing 12.

The upper case 18C is formed so that one end thereof is secured to the upper surface of the middle case 18B, while the other end forms the top housing 16 that extends out above the partition member 14. The upper case 18C is covered from above by an upper case cover 18D, and between the upper case 18C and the upper case cover 18D, a reduced-speed motor 22 is provided.

The reduced-speed motor 22 has speed reduction gears (not shown in the drawings) inside, and the drive shaft 24 (see Figures 9 and 10), which is the output shaft of the reduced-speed motor 22, rotates at low speed. To this drive shaft 24, a hot water receptacle 30, described later, is mounted by a chuck 26 (see Figure 6), so that the hot water receptacle 30 is detachable with respect to the drive shaft 24. The chuck 26 is opened and closed by an attachment/detachment button 28 that is provided in the upper surface of the top housing 16. In other words, the reduced-speed motor 22 is circular, as viewed from above (see Figure 5), and the lid-shaped attachment/detachment button 28 surrounds the upper part of the motor cover 22A in which the reduced-speed motor 22 is provided.

The attachment/detachment button 28 returns upward by a coil spring 28A, and a plurality of projections 28B (see Figure 5) extending downward through the outside of the motor cover 22A are engaged with engagement pawls 26A and 26A of the chuck 26. When the attachment/detachment button 28 is pushed down, the projections 28B open the chuck 26 by opening the engagement pawls 26A and 26A to the outside (that is, they release the hot water receptacle 30). Furthermore, a hexagonal column-shaped bushing 24A is secured to the lower end of the drive shaft 24, while a hexagonal hole 30B (see Figure 10) into which the bushing 24A engages is formed in a hub unit 30A of the hot water receptacle 30. A ring-shaped channel 30C is formed in the outer circumference of that hub unit 30A. With this ring-shaped channel 30C, the semicircular arch-shaped tips of the engagement pawls 26A and 26A are engaged and disengaged.

In the base housing 12 of the main body unit 10, an electric heater 32 is provided. The electric heater 32 heats water conducted from a water reservoir 42, described later, through a water hose 34 (see Figure 5) and makes high-temperature (boiled) hot water which is sent by a hot water hose 36 and hot water pipe 38 provided inside the vertical stand 18 to the top housing 16. The hot water (boiling water) is conducted, through an activated charcoal filter 40 provided adjacent to the drive shaft 24 in the lower surface of the top housing 16, to the above-described hot water receptacle 30.

As is clear from Figure 10, the lateral cross-section of the hot water receptacle 30 is substantially umbrella-shaped (or a substantially inverted umbrella-shaped). In the upper surface of the hot water receptacle 30, a plurality of ribs are formed in the radial direction; and hot water drip holes 30D are formed between the ribs. By suitably setting the distance from the hub unit 30A or the drip holes 30D or by varying the distance for each of the drip holes 30D, the position of the hot water drip relative to an iced coffee extraction funnel 50, described later, attached to the hot water receptacle 30 can be changed. In addition, when the scatter 70 that is used when extracting hot coffee, described later, is attached to the hot water receptacle 30 (see Figure 4), the hot water receptacle 30 conducts the hot water to the vicinity of the center of that scatter 70.

The heater 32 has (see Figure 5) a heating element 32A bent in substantially a U-shape around a metal pipe, and a circular metal plate 32B is attached to the upper surface of heating element 32A. The metal plate 32B is fitted from below into the circular opening 12A provided in the base housing 12. On the metal plate 32B that faces the opening 12A, a jug 66, described later, is placed; and, in the hot coffee extraction mode, the jug 66 is kept warm.

The water reservoir 42 will be described.

The water reservoir 42 is, as shown in Figures 1 and 4, mounted on the outer surface of the middle case 18B in the main body unit 10. In other words, as seen from Figure 3, the vertical stand 18 has a substantially semicircular shape, as viewed from above, and the water reservoir 42 is shaped so that the horizontal cross-section thereof divides a part of the column vertically, so that the circular arc-shaped outer surface thereof follows, substantially smoothly, the outer surface of the vertical stand 18.

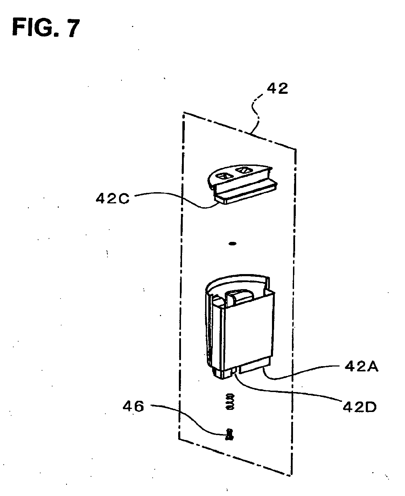

The water reservoir 42 is mounted in a water reservoir mounting chamber 44 that opens outwardly and is provided in the middle case 18B. In the partition member 14 (see Figure 4) that forms the bottom of this water reservoir mounting chamber 44, a concavity 44A, substantially trapezoidal as seen from above, is formed (see Figures 5 and 9); and in the bottom of the water reservoir 42, a convexity 42A, capable of engaging the concavity 44A substantially vertically from above, is formed (see Figure 7). In the upper surface of the water reservoir 42, moreover, a step 42B is formed on the inside (on the inmost side of the water reservoir mounting chamber 44), and the outside of the upper surface of the water reservoir 42 bulges out to the outside of the water reservoir mounting chamber 44. The upper surface of the water reservoir 42 is provided with a cover 42C (see Figure 7).

In the water reservoir mounting chamber 44, a step 44B is formed above the step 42B on the water reservoir 42 side so as to be separated by a certain distance, specifically by a distance slightly larger than the depth of the concavity 44A. Accordingly, when the water reservoir 42 is pulled upward from the mounted condition shown in Figures 1 and 4, the step 42B strikes the step 44B in the mounting chamber 44 from below; as a result, the upward movement thereof is limited. If, in this condition, the step 42B is released from the step 44B by way of tilting the top of the water reservoir mounting chamber 44 outward, then the water reservoir 42 can be pulled diagonally upward while causing the convexity 42A in the bottom to bulge out from the concavity 44A.

In the outer surface of the water reservoir 42 that is of a circular arc shape, as seen from above, a handle 42C is provided. In the lower case 18A, a handle 10A is provided so as to be positioned below the water reservoir 42.

In the convexity 42A which is in the bottom of the water reservoir 42, a water discharge valve 46 is provided (see Figures 7 and 9). This water discharge valve 46 is in a downwardly moved position by a coil spring so as to close the water discharge path; and when the water reservoir 42 is loaded in the water reservoir mounting chamber 44, the water discharge valve 46 is pushed upward by a projection 44C provided in the concavity 44A, thus opening the water discharge path. The opposing surfaces of the convexity 42A and concavity 44A are tightly sealed; accordingly, water from the water reservoir 42 will flow out only in a volume that will fill the inside of the concavity 44A and will never flow out to the outside of the concavity 44A.

In actuality, moreover, a tube 44D (see Figure 5), surrounding the projection 44C and opening upward, is formed in the water reservoir mounting chamber 44, in the bottom of the water reservoir 42, a tube 42D (see Figure 7) that engages that tube, on the inner diameter side thereof, is formed, and the engaging circumferential surfaces of the two tubes 44D and 42D are tightly sealed. Accordingly, when the water discharge valve 46 opens, the interior of a small void surrounded by the tubes 44D and 42D is filled with water.

As seen from Figure 5, to the bottom of the small void surrounded by the tubes 44D and 42D, the above-described water hose 34 is connected through a check valve 48. As a result, when water from the water reservoir 42 is conducted through the water discharge valve 46, check valve 48, and water pipe 34, into the heater 32 and heated to boiling by the heater 32, then it flows out through the hot water hose 36, hot water pipe 38, and filter 40 into the hot water receptacle 30. At such time, because of the presence of the check valve 48, the boiling water will not flow backward to the water reservoir 42. When the water level inside the heater 32 drops, water is supplied from the water reservoir 42, and the above action is continued.

The iced coffee extraction mode will be described below.

In this iced coffee extraction mode, as seen from Figure 1, an iced coffee extraction funnel 50 is attached to the hot water receptacle 30, and a cooling unit 52 is mounted on the partition member 14. The iced coffee extraction funnel 50, as shown in Figures 1 and 9, has a circular upper edge that is folded back to the outside, and the outer circumference thereof is engageable with the hot water receptacle 30. A joining structure can be effected, for example, such that, in the outer circumference of the upper edge of the funnel 50, a channel bent into a hook shape is formed so that the upper end thereof opens at the upper edge, and a projection that engages the hook-shaped channel is formed on the inner surface of the outer circumferential part of the hot water receptacle 30, so that, when the funnel 50 is pushed in and upward relative to the hot water receptacle 30 while causing the upper end portion of the hook-shaped channel to engage the projection, the projection will be caused, by slightly rotating the funnel 50, to engage in the interior (horizontal portion) of the hook-shaped channel.

As seen from Figures 6 and 9, in the bottom of the funnel 50 are secured with two vanes (stirring vanes) 50A for stirring the coffee liquid; and, from the vicinity of the upper edge of the funnel 50, three stirring rods 50B that constitute vanes for stirring ice water are secured. These stirring vanes 50A and stirring rods 50B extend vertically downward. The radius of rotation of the stirring vanes 50A is set to be smaller than the radius of rotation of the stirring rods 50B.

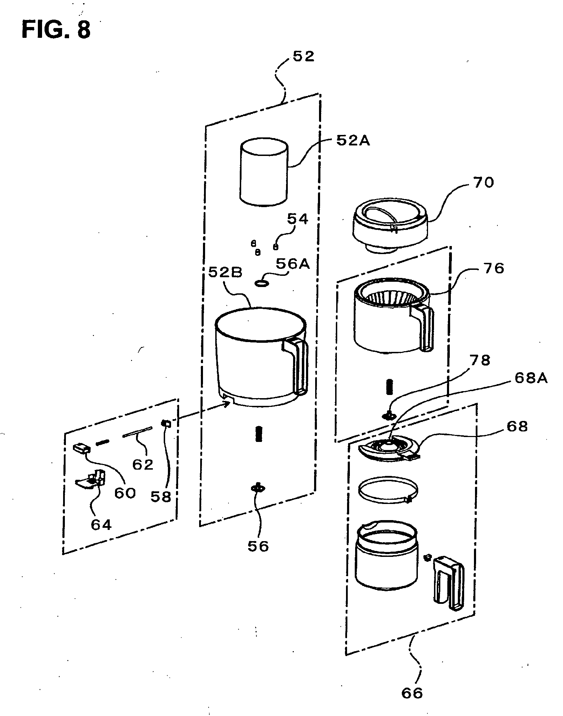

The cooling unit 52 is comprised of a cylindrical coffee liquid receptacle 52A (a coffee liquid container, the extract liquid receptacle of the present invention) with a bottom and an ice water reservoir 52B (the cooling liquid reservoir of the present invention) which are combined concentrically about a vertical axis (concentric axis) as the center. The coffee liquid receptacle 52A is made of a metal having good thermal conductivity such as aluminum. The bottom of the coffee liquid receptacle 52A is secured so that it floats upward (or is raised) from the ice water reservoir 52B with spacers 54 (see Figures 1 and 8) at three locations from the ice water reservoir 52B. As a consequence, ice water also contacts the bottom surface of the coffee liquid receptacle 52A, thus enhancing the coffee liquid cooling effect. The coffee cooling effect is further enhanced by way of forming surface irregularities, projections and/or fins on at least the inner and the outer circumferential surfaces of the wall of the coffee liquid receptacle 52A that partitions the coffee liquid receptacle 52A and the ice water reservoir 52B.

The center part of the bottom of the coffee liquid receptacle 52A sinks downward and adheres tightly to the ice water reservoir 52B, and a discharge valve 56 passes through the tightly adhering center part. To this discharge valve 56 is applied a downward-oriented return tendency, and the upper end of the discharge valve 56 normally closes the discharge hole in the coffee liquid receptacle 52A by a seal ring 56A (see Figures 1 and 8). The lower end of this discharge valve 56 is formed in a substantially inverted umbrella shape. When this inverted umbrella-shaped part is pushed up from the side by a valve opening/closing piece 58 capable of sliding in the horizontal direction (see Figures 8 and 9), the discharge valve 56 is thereby opened, allowing the coffee liquid to be discharged downward.

As seen from Figures 8 and 9, the valve opening/closing piece 58 is connected by a rod 62 to an operating piece (open/close button) 60 which is located near the outer circumference of the bottom of the ice water reservoir 52B, and it is mounted to the bottom of the ice water reservoir 52B by a cover 64. The operating piece 60, rod 62, and valve opening/closing piece 58 are imparted with a tendency to return to the outside (direction that closes the discharge valve 56) by a coil spring.

The cooling unit 52 is placed on the partition member 14 with the hot water receptacle 30 set on the iced coffee extraction funnel 50, with the stirring vanes 50A of the iced coffee extraction funnel 50 inserted in the coffee liquid receptacle 52A from above, and with the stirring rods 50B inserted in the ice water reservoir 52B from above, so that the whole of these are on the partition member 14. When the cooling unit 52 is placed on the partition member 14c, the circular seat 52C (see Figure 1) provided at the bottom of the ice water reservoir 52B is engaged with a circular hole 14A provided in the partition member 14; as a result, the cooling unit 52 is positionally stabilized. The reference numeral 52D is a handle of the ice water reservoir 52B. The stirring rods 50B are for stirring ice water, and it also functions as stirring vanes for the ice water.

A jug (vessel) 66 is mounted below the cooling unit 52 as shown in Figure 1. This jug 66 is placed on the round plate 32B of the heater 32 (see Figure 5) attached to the opening 12A in the base housing 12, with a thermally insulating mat in between. The cover 68 (or cover plate) 68 for the jug 66A is formed with a convexity 68A (see Figure 4) which is erected in the center of the cover 68, and a plurality of drip holes are formed in a ring-shaped channel surrounding the convexity 68A. As a result, if the operating piece 60 of the cooling unit 52 is pushed from the side to open the discharge valve 56, iced coffee liquid in the coffee liquid receptacle 52A flows down into the jug 66. Reference numeral 66A (see Figure 1) is a handle attached to the jug 66. The convexity 68A of the cover 68 shown in Figure 4 is for pushing up and opening the discharge valve 78 for a hot coffee extraction funnel 76 in the hot coffee extraction mode that will be described later.

In this condition, that is, in the iced coffee extraction mode, the hot water receptacle 30 is attached to the iced coffee extraction funnel 50, the stirring vanes 50A and stirring rods 50B are inserted, respectively, into the coffee liquid receptacle 52A and ice water reservoir 52B of the cooling unit 52, and the whole of these parts is placed on the partition member 14. Then, the hot water receptacle 30 and funnel 50, which form a single unit, are pulled up, allowing the hub unit 30A of the hot water receptacle 30 to be locked to the drive shaft 24 by the chuck 26. As a result, when the motor 22 is started, the hot water receptacle 30 and iced coffee extraction funnel 50 are rotated as a unit together with the drive shaft 24.

When a paper filter and coffee powder (neither shown in the drawings) are set beforehand in the funnel 50, and the heater 32 is caused to heat and hot water is introduced from the filter 40, then the hot water is dispersed by the hot water receptacle 30 and dripped into the funnel 50; and the extracted coffee liquid is accumulated in the coffee liquid receptacle 52A of the cooling unit 52. Ice water has been placed in the ice water reservoir 52B beforehand; accordingly, the extracted coffee liquid is quickly chilled in the coffee liquid receptacle 52A. At that time, both the stirring vanes 50A and the stirring rods 50B are rotated together with the funnel 50, thus stirring the coffee liquid and ice water; accordingly, the coffee liquid cooling effect is significantly great. In other words, the motor 22 which is a funnel rotating drive unit for rotating the funnel 50 is also a vane drive unit.

When coffee extraction finishes, and the coffee liquid accumulated in the coffee liquid receptacle 52A of the cooling unit 52 has been sufficiently cooled by the ice water, the motor 22 is stopped. When next the operating piece 60 of the discharge valve 56 is pushed from the side to open the discharge valve 56, chilled coffee liquid flows down into the jug 66. Then, the jug 66 is removed from the base housing 12, and the iced coffee therein is poured in a cup.

Next, the hot coffee extraction mode will be described, referring primarily to Figures 4, 5, 8, and 11.

In this hot coffee extraction mode, the scatter 70 is attached to the hot water receptacle 30. In other words, the scatter 70 is attached in place of the iced coffee extraction funnel 50 used in the above-described iced coffee extraction mode. In this scatter 70 are formed a deep concavity 72 at a position including the rotational center axis (centerline) A (see Figure 11) of the drive shaft 24 (see Figures 9 and 10) (through which the center axis A passing), and a shallow concavity 74 not at a position including the rotational center axis A (through which the center axis A not passing). The bottoms of the two concavities 72 and 74 are continuous in a substantially stair shape as shown in Figure 11.

In the bottom of each of the concavities, a drip hole 72A and 74A, respectively, is formed. The positions R1 and R2 in the radial direction of the drip holes 72A and 74A relative to the rotational center axis A are set so that R1 < R2, and the hole diameter ***a*** of the drip hole 72A is smaller than the hole diameter b of the drip hole 74A (a < b).

The radial position R1 of the drip hole 72A is set so that, when coffee powder mainly for a small number of people (one or two people) is put in the funnel 76 described later, the hot water drips along the circle of comparatively narrow radius in the vicinity of the center. On the other hand, the radial position R2 of the drip hole 74A is set so that, when coffee powder for a medium or large number of people is put in the funnel 76, the hot water not only strikes coffee powder positioned near the center but also strikes coffee powder positioned apart from the center. The hole diameters ***a*** and ***b*** of the drip holes 72A and 74A are set so as to optimize the distribution of the hot water dripping from the drip holes 72 and 74, taking into consideration the differences in the depths from the liquid surface of the hot water accumulated in the scatter 70 (i.e. from the hot water surface).

The reference numeral 76 denotes a hot coffee extraction funnel. This funnel 76 can be locked in the hole 14A of the partition member 14. The locking structure is made, for example, so that an engagement projection provided on the funnel 76 is engaged in a hook-shaped channel formed in the inner circumferential surface of the hole 14A, and the funnel 76 is rotated slightly in the horizontal direction to lock the funnel 76. In the bottom of this funnel 76 is provided a discharge valve 78. The discharge valve 78 has a structure similar to that of the discharge valve 56 of the cooling unit 52 described above.

The discharge valve 78 has a tendency to return downward, and, while a seal ring attached to its upper end closes the discharge hole of the funnel 76, the lower end of the discharge valve 78 is formed in a substantially inverted umbrella shape. The discharge valve 78 opens the discharge hole when its inverted umbrella-shaped part is pushed up from below. When the jug 66 is set below the partition member 14 (on the base housing 12), the convexity 68A of the cover 68 of the jug 66 makes contact from below with the lower end of the discharge valve 78; and, due to the inclined surface of the convexity 68A, the cover 68 is pushed up and opens the discharge hole of the funnel 76 automatically. Hot coffee extraction is conducted with the jug 66 set in this condition. At this time, the funnel 76 is locked to the partition member 14, and thus the funnel 76 is pushed up by the jug 66 and will not ever float.

In the above-described hot coffee extraction mode, a paper filter and coffee powder are first set in the funnel 76, and the funnel 76 is next secured (locked) to the partition member 14. Then, when the heater 32 is made to emit heat, and boiling water is poured into the hot water receptacle 30, hot water enters the scatter 70. The hot water first enters the deep concavity 72, and drips from the drip hole 72A in the vicinity of the center of the funnel 76. Since the scatter 70 is rotated together with the drive shaft 24, dripping occurs on a small circle in the vicinity of the center of the funnel 76.

The volume of hot water flowing into the funnel 76 from the hot water receptacle 30 is set so that it is greater than the volume of drip from the drip hole 72A, so that the liquid surface (hot water surface) in the deep concavity 72 rises. When the liquid surface of the hot water rises and spreads to the shallow concavity 74, hot water begins to drip also from the drip hole 74A; and when the liquid surface rises further, hot water is dripped from both of the drip holes 72A and 74A.

As described above, the radial position R2 of the drip hole 74A is greater than the radial position R1 of the drip hole 72A. Accordingly, the hot water dripping from the drip hole 74A drips on a circle that is distant from the center of the funnel 76. As a result, hot water can be suitably dispersed and dripped onto the coffee powder inside the funnel 76. In this manner, it is possible to at first pour most of the hot water in the vicinity of the center of the funnel 76, and then, after the coffee powder has been suitably steamed, to have the hot water poured also nearer to the outer circumference and create optimal extraction conditions. It is thus possible to extract hot coffee which is highly fragrant and has good taste.

Furthermore, since there is a gap between the funnel 76 and the scatter 70 (see Figure 4), the operator is able to view the inside of the funnel 76 from this gap. In other words, the condition wherein foam is generated inside the funnel 76 can be verified. As a result, pleasure increases when extracting coffee.

Next, a control section 80 will be described with reference to Figures 5 and 9.

The control section 80 controls the heater 32 and the motor 22 based on the beverage type, hot or ice, and on the number of portions (number of cups) to be extracted, which are set by the input means 82. The input means 82 have switches 82A and 82B for inputting either hot (H) or ice (I), and a switch 82C for inputting how many cups (extraction quantity). The control section 80 determines hot or ice based on an ON input from either switch 82A or switch 82B, and it determines how many cups (extraction quantity) by the number of turning-on of switch 82C.

The control section 80 controls the volume of hot water poured in by changing the heating time with the heater 32 according to the extraction quantity. When heating for a time To for one person, for example, the heating time is made 2T₀ in case for two persons, and 3T₀ if it is for three persons. The control section may change the flow-out volume in response to the type, whether hot or ice. When it is desired to extract strong coffee for iced coffee, for example, then the flow-out volume is made less, so that the heating time is set shorter than when extracting hot coffee.

It can be set so that the control section 80 changes the hot water flow-out speed for hot or iced coffee. For iced coffee, for example, the flow-out speed is made slower in order to extract strongly. As a result, the temperature of the heater 32 is set lower than when extracting hot coffee. A temperature sensor 84 for detecting the heater temperature can be provided as shown in Figures 4 and 9, for example, so that the control section 80 performs feedback control in response to the heater temperature.

In the embodiment described above, selection can be made for a hot coffee extraction mode and an iced coffee extraction mode, but a part of the configuration used in this embodiment is applicable to a coffee maker so that it used exclusively in one of two modes. Using the scatter 70 attached to the drive shaft 24 at the top of the main body unit (in a manner that it is either detachable or undetachable), a coffee maker for extracting only hot coffee or a coffee maker for extracting only iced coffee can be made. In the latter case in which the coffee maker uses a scatter, an iced coffee extraction funnel is held in the main body unit; and as in the case of extracting hot coffee, hot water can be dispersed over the entire funnel, and it is possible to visually verify the situation inside the funnel during extraction.

The bottom of the scatter can be made in a conical shape so that the scatter is deep in the vicinity of the center, and it can also be made in a multi-step stair shape (including two steps or two or more steps) so that the scatter is deep in the vicinity of the center and it becomes shallower in steps toward the vicinity of the periphery. Either one or a plurality of drip holes is provided at positions thereof depth in the scatter.

When the scatter bottom is made in a stair shape, the liquid surface of the hot water will change (become lower) continuously, and the height of the drip holes provided in steps will change non-continuously, so that it is easy to adjust the relationship between the volume of hot water and the number of drip holes (for dripping hot water) used. Adjustment can be made, for example, so that only drip holes at deep positions in the vicinity of the center are used when extracting for one person, preventing hot water from dripping in the region where there is no coffee powder at the funnel periphery, or so that the hot water is dispersed and made to drip over a wide range out to the vicinity of the funnel periphery when extracting portions for many people.

The structure, in which steps 42B and 44B are formed, respectively, separately by a certain measure in the vertical direction in the water reservoir 42 and the water reservoir mounting chamber 44, is applicable to a dedicated coffee maker for extracting either hot coffee only or iced coffee only, with the above-described advantages.

Also, the above configuration for the water reservoir 42 and water reservoir mounting chamber 44 is applicable to water reservoirs or liquid reservoirs or the like used in small electric products other than coffee makers, such, for example, as interior humidifiers, or humidifiers provided in cosmetic equipment or heating equipment.

The configuration for controlling the hot water extraction volume according to the heating time with the heater 32 can also be applied to dedicated coffee makers for hot coffee or iced coffee. In such cases, the heater heating time can be monitored with a timer, and the structure will not become complex because the control section 80, formed by a microcomputer, already includes a timer.

Furthermore, the stirring vanes 50A and stirring rods 50B attached to the iced coffee extraction funnel are applicable to a dedicated coffee maker for iced coffee. As described in the foregoing, the configurations of the above-described embodiment are applicable to dedicated iced coffee makers and not only to coffee makers for both hot and iced coffee. Second embodiment

Figure 12 is a side view of the stirring vanes 100A and 100B of another embodiment of the present invention.

In this embodiment, the stirring vanes 100A and 100B are made attachable and detachable to and from a funnel 100 which is similar to the funnel 50 of the first embodiment. More specifically, the stirring vanes 100A and 100B are provided at their upper ends with male screw threads, so that they are capable of being screwed into and fastened to the funnel 100 from below. These stirring vanes 100A and 100B correspond, respectively, to the stirring vanes 50A and 50B of the first embodiment and are for stirring the extract liquid and ice water.

### Third embodiment

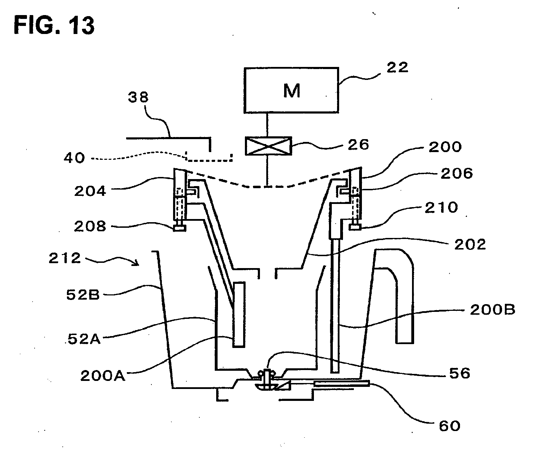

Figure 13 is a side view of the coffee maker of another embodiment of the present invention. In this embodiment, extract liquid stirring vanes 200A and 200B are provided detachably on the hot water receptacle 30 of the first embodiment.

More specifically, an extraction funnel 202 (corresponding to extraction funnel 50) is attached detachably from below to the hot water receptacle 200 (corresponding to the hot water receptacle 30 in Figure 1), projections 204 and 206 which protrude downward are provided on the outside of the extraction funnel 202, and the upper ends of the stirring vanes 200A and 200B are made attachable and detachable to and from the projections 204 and 206. In this structure, the stirring vanes 200A and 200B are connected by screws 208 and 210 that pass through upper end attachment parts of the stirring vanes 200A and 200B from below to above.

In Figure 13, the reference numeral 212 is a cooling unit that has the same structure as the cooling unit 52 of the first embodiment. Accordingly, in Figure 13, the same reference numerals are assigned to the same parts as in the above-described embodiment, and the descriptions thereof are omitted.

### Fourth embodiment

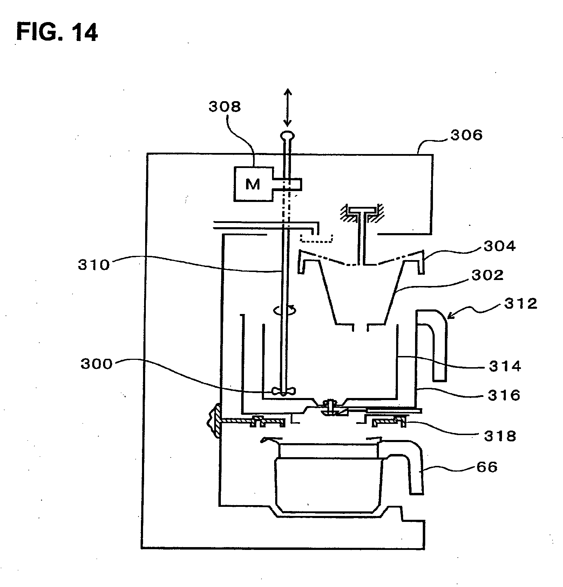

Figure 14 is a side view of the coffee maker of still another embodiment of the present invention. In this embodiment, only a stirring vane 300 is rotated independently.

More specifically, a hot water receptacle 304 to which an extraction funnel 302 is provided detachably to the top housing 306, and it is suspended without being rotated, and a stirring vane 300 is attached to the rotating shaft 310 driven by a motor 308 provided in the top housing 306.

In Figure 14, the reference numeral 312 is a cooling unit, 314 is a coffee liquid receptacle, and 316 is a cooling liquid reservoir, all being the same as those in the first embodiment. The cooling unit 312 is put in and withdrawn from the upper surface of a partition member 318; accordingly, there is a danger that the stirring vane 300 interferes with the cooling unit 312. Accordingly, the rotating shaft 310 of the stirring vane 300 is preferably made so that it can be raised upward. For example, the rotating shaft 310 can be given a polygonal cross-section (square, pentagonal, or triangular or the like) so as to be held in the motor 308 in a vertically slidable fashion.

### Fifth embodiment

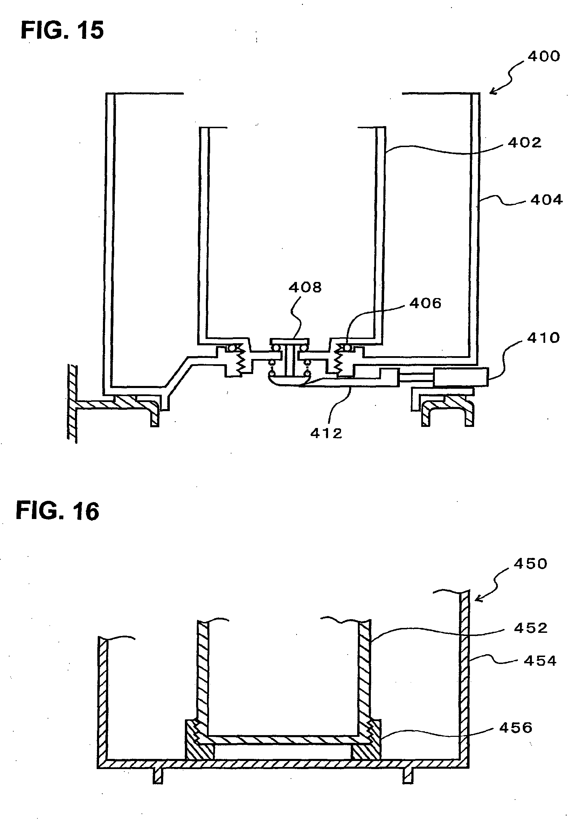

Figure 15 is a lateral cross-sectional view of another embodiment of the present invention. In the structure of Figure 15, the cooling unit 400 has the coffee extract liquid receptacle 402 made attachable and detachable to and from the ice water reservoir 404.

More specifically, a circular opening is provided in the inner bottom of the ice water reservoir 404, and the portion near the bottom of the extract liquid receptacle 402 is made so that it can be screwed into the circular opening with a seal ring 406 in between. Also, with a discharge valve 408 provided in the bottom of the extract liquid receptacle 402, discharging the extract liquid can be made easy.

The discharge valve 408 is, as in the first embodiment, is opened by pushing up the wedge-shaped valve opening/closing piece 412 connected to an operating piece 410 that is located near the outer circumference of the bottom of the ice water reservoir 404.

### Sixth embodiment

Figure 16 is a lateral cross-sectional view of still another embodiment of the present invention. The cooling unit 450 of this embodiment is made so that the coffee extract liquid receptacle 452 can be secured to a pedestal 456 secured to the inner bottom of the ice water reservoir 454.

More specifically, the pedestal 456 is a ring-shaped element; and, by screwing or engaging the lower outer circumferential surface of the coffee extract liquid receptacle 452, which is in the shape of a cylinder having a bottom (or with the bottom closed), into the upper inner circumferential surface thereof, the coffee extract liquid receptacle 452 is secured detachably.

### Seventh embodiment

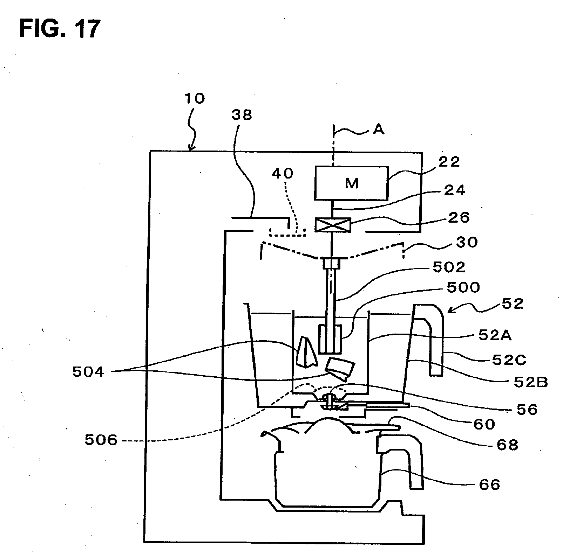

Figure 17 is a side elevational view of another embodiment of the present invention. In this embodiment, black or green tea leaves or teabags are placed directly into the extract liquid receptacle, and hot water is poured in there and stirred. In this case, the extract liquid receptacle constitutes beverage extraction means.

More specifically, in Figure 17, the cooling unit 52, jug 66, and main body unit 10 and the like that are used are the same as in the first embodiment; and the differences from the first embodiment are that no extraction funnel 50 is used and that the stirring vane 500 is attached to the hot water receptacle 30. Accordingly, the same reference numerals are assigned to the same parts as in Figures 1 and 9 of the first embodiment, and the descriptions thereof will be omitted.

The stirring vane 500 is attached to the lower end of a rotating shaft 502 of which upper end is attached detachably in the center of the hot water receptacle 30. The rotating shaft 502 advances from above into the interior of the extract liquid receptacle 52A. Teabags 504 are placed beforehand inside the extract liquid receptacle 52A. Hot water passes through the hot water pipe 38 and filter 40 and is conducted by the hot water receptacle 30 to the vicinity of the center of the coffee maker, and then it flows from the vicinity of the center of the hot water receptacle 30, approaching to the rotating shaft 502, into the extract liquid receptacle 52A.

The hot water receptacle 30 and the stirring vane 500 preferably begin rotating after a certain volume of hot water has accumulated in the extract liquid receptacle 52A. However, it is possible that, by making the position of the stirring vane 500 sufficiently higher than the bottom surface of the extract liquid receptacle 52A, the hot water (extract liquid) contacts the stirring vane 500 after a certain volume of hot water has accumulated. In this case, the hot water receptacle 30 and stirring vane 500 can be rotated from the beginning of the extraction process.

Green tea leaves can be placed directly into the extract liquid receptacle 52A instead of teabags. In this case, it is preferable attach a filter 506 covering the discharge valve 56 to the bottom of the extract liquid receptacle 52A. With this filter 506, the green tea leaves can be prevented from clogging the discharge valve 56.

### Eighth embodiment

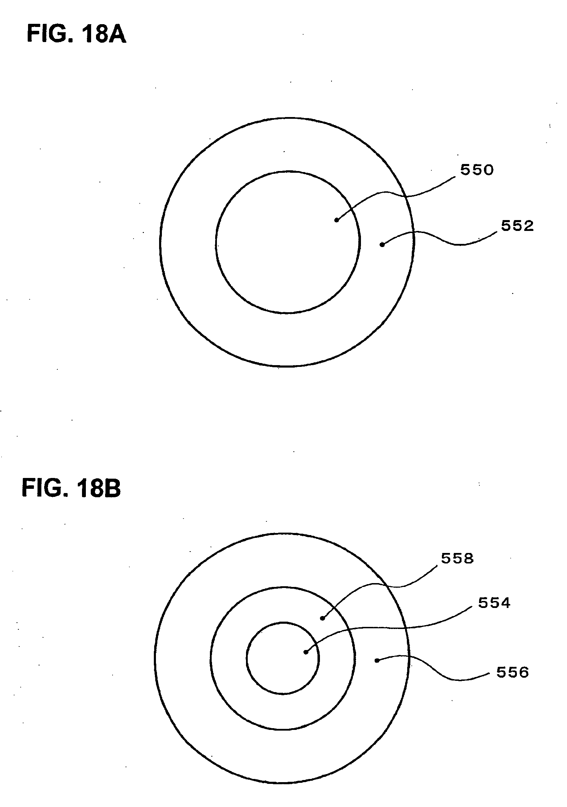

Figures 18A and 18B are top views of another embodiment of the cooling unit.

In the structure of Figure 18A, the cooling unit is in the shape of a double cylinder; and the center portion is used as a cooling liquid reservoir 550, and the outer cylindrical portion surrounding the outer circumference thereof is used as an extract liquid receptacle 552.

In the structure of Figure 18B, the cooling unit that is made in the shape of a triple cylinder. The center portion and the outer cylindrical portion on the outside are used as cooling liquid reservoirs 554 and 556, respectively, and the intermediate cylindrical portion sandwiched between the two portions 554 and 556 is used as an extract liquid receptacle 558. The cooling liquid reservoirs 554 and 556 can be connected at the bottom.

## Claims

1. A beverage maker, wherein said beverage maker is comprised of:
an extract liquid receptacle for accumulating therein extract liquid extracted by beverage extraction means, and
a cooling liquid reservoir for accommodating therein cooling liquid that contacts the extract liquid with a wall of said extract liquid receptacle in between; and
wherein, said beverage maker further comprises:
a stirring vane for stirring the extract liquid inside said extract liquid receptacle; and
a vane drive unit for driving said stirring vane.

2. The beverage maker according to claim 1, wherein said stirring vane is driven in a horizontal direction.

3. The beverage maker according to claim 2, wherein said stirring vane advances vertically into said extract liquid receptacle and is rotationally driven about a vertical line.

4. The beverage maker according to claim 1, further comprising
a stirring vane for stirring the cooling liquid in said cooling liquid reservoir, and
a vane drive unit for driving said stirring vane.

5. The beverage maker according to claim 1, wherein said beverage extraction means is an extraction funnel.

6. The beverage maker of claim 5, wherein
said extraction funnel is rotationally driven about a vertical line,
said stirring vane is secured to said extraction funnel, and
said rotational drive unit for said extraction funnel serves also as a vane drive unit.

7. The beverage maker according to claim 3 or 4, wherein
said beverage extraction means is an extraction funnel, and
said stirring vane advances into said extract liquid receptacle from a side of said extraction funnel.

8. The beverage maker according to claim 6, wherein said stirring vane is attachable to and detachable from said extraction funnel.

9. The beverage maker according to claim 1, wherein surface irregularities are provided on said wall of said extract liquid receptacle, said wall partitioning said extract liquid receptacle and said cooling liquid reservoir.

10. The beverage maker according to claim 1, wherein a rotating direction of said stirring vane is changeable in between forward and reverse directions by said vane drive unit.

11. The beverage maker according to claim 1, wherein
said extract liquid receptacle and said cooling liquid reservoir are provided concentrically about a vertical concentric axis, and
said stirring vane is rotated about a concentric axis of said tanks.

12. The beverage maker according to claim 1, wherein said extract liquid receptacle is attachable to and detachable from said cooling liquid reservoir.

13. The beverage maker according to claim 1, wherein said extract liquid receptacle is provided in a bottom thereof with a discharge valve that passes through a bottom of said cooling liquid reservoir.

14. The beverage maker according to claim 5, further comprising a hot water receptacle for conducting hot water to said extraction funnel, said hot water receptacle rotating about a vertical line and being provided with a stirring vane for stirring the extract liquid.

15. The beverage maker of claim 11, wherein said extract liquid receptacle surrounds, in a ring shape, an exterior of said cooling liquid reservoir.

16. The beverage maker of claim 11, wherein said cooling liquid reservoir is comprised of an outer cylindrical portion for surrounding an exterior of said extract liquid receptacle and a center part positioned in a center of said extract liquid receptacle.
